# EUROPEAN PATENT APPLICATION

(11) **EP 4 692 238 A1**
(43) Date of publication of application: **11.02.2026**
(21) Application number: 24306333.6
(22) Date of filing: 07.08.2024
(51) Int. Cl.: C08L 77/02

(54) **BIOBASED PLASTICIZER FOR POLYMER**

(71) Applicant: ARKEMA FRANCE, 92800 Puteaux (FR)
(72) Inventor: YE, Wen, CHANGSHU, 215522 (CN); WERTH, Michael, 27470 SERQUIGNY (FR)
(74) Representative: Arkema Patent

(57) **Abstract**

The present invention relates to a plasticizer for polyamide composition, said plasticizer comprising at least one compound of formula (I):

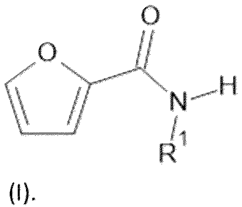

## Description

### Technical field

The present invention relates to biobased plasticizer for polyamide and to polyamide composition comprising such biobased plasticizer.

### Background art

Polyamides are highly valuable polymers due to their unique properties, notably their high resistance to chemicals and solvents. They are largely used notably for molding and textile applications. Polyamides, in particular those with long aliphatic chains such as PA11, PA12, PA6.10, PA10.10, are also extruded into pipes, tubes, hoses and similar objects where higher flexibility is additionally required. Plasticizers may be added when even higher flexibility is needed.

Plasticizers such as lactames, esters, and sulfonamides are known as plasticizers for polyamides. However, esters are prone to hydrolyzation and the hydrolyzation products may degrade the properties of the polyamide resin. Furthermore, they can give rise to coloration.

The plasticizer most used today for polyamides is butyl-benzenesulfonamide (BBSA). This compound is derived from fossil resources and further suspected of being neurotoxic, and of having negative effects on breathing.

There is thus a need to provide alternative plasticizers for polyamide resins that are totally or partially bio-based and that present less or no toxicity.

### Summary of the invention

The present invention relates to a plasticizer notably for polyamides, said plasticizer comprising at least one compound of formula (I): 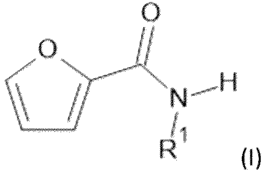 wherein R¹ is chosen among:
- a linear or branched alkyl group comprising from 3 to 18 carbon atoms;
- a linear or branched alkyl group comprising from 3 to 18 carbon atoms and substituted by at least one hydroxyl (OH) group;
- a linear or branched alkyl group comprising from 3 to 18 carbon atoms and substituted by at least one NH(CO)CH₃ group; and
- a 2-methylene-furane group.

Preferably, in compound of formula (I), R¹ is chosen among:
- a linear or branched alkyl group comprising from 3 to 18, preferably 3 to 11, carbon atoms; and
- a linear or branched alkyl group comprising from 3 to 18, preferably 3 to 11, carbon atoms and substituted by at least one, preferably one, hydroxyl (OH) group.

Preferably, the compound of formula (I) is chosen among the following compounds:

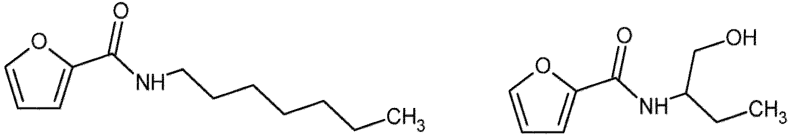

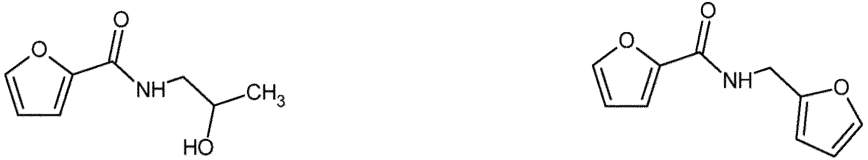

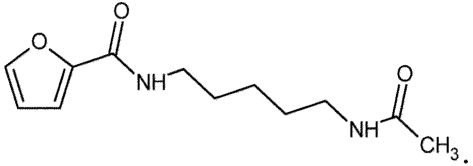

Preferably, the compound of formula (I) is chosen among the following compounds:

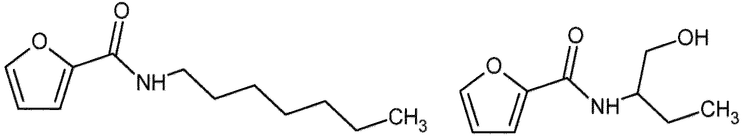

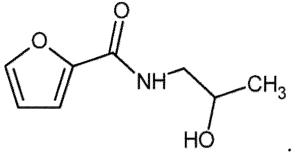

The present invention also relates to a composition comprising:
- at least one polyamide; and
- at least one compound of formula (I) such as defined above.

Preferably, the at least one polyamide is an aliphatic polyamide. The aliphatic polyamide may in particular be chosen among PA6, PA66, PA6/66, PA11, PA12, PA610, PA612, PA1010, PA1012 and PA1212, preferably PA11, PA12, PA610, PA6/66, PA612, PA1010, PA1012 and PA1212, more preferably PA11, PA610, PA6/66 PA1010, PA1012 and PA1212, still more preferably PA11 and PA12, and in particular PA11.

Preferably, the composition comprises, with respect to the total weight of the composition, from 50 to 98 wt %, preferably from 70 to 97 wt %, more preferably from 75 to 97 wt %, of the at least one polyamide.

Preferably, the composition comprises, with respect to the total weight of the composition, from 2 to 34 wt %, preferably from 3 to 20 wt%, preferably from 3 to 18 wt %, of the at least one compound of formula (I).

Preferably, the composition comprises, with respect to the total weight of the composition:
- from 50 to 98 wt %, preferably from 70 to 97 wt %, more preferably from 75 to 97 wt %, of polyamide; and
- from 2 to 34 wt %, preferably from 3 to 20 wt %, more preferably from 3 to 18 wt %, of at least one compound of formula (I);
- from 0 to 45 wt%, preferably from 3 to 45 wt%, preferably from 5 to 35 wt%, more preferably from 7 to 30 wt%, of at least one impact modifier;
- from 0 to 35 wt%, preferably from 5 to 30 wt%, more preferably from 5 to 25 wt%, of at least one flame retardant; and
- from 0 to 5 wt.%, preferably 0,1 to 3 wt%, preferably 0,5 to 2 wt% with respect to the total weight of the composition, of at least one further additive.

Preferably, the composition comprises, with respect to the total weight of the composition, from 3 to 45 wt%, preferably from 5 to 35 wt%, more preferably from 7 to 30 wt%, of at least one impact modifier.

Preferably, the composition comprises, with respect to the total weight of the composition, from 5 to 30 wt%, more preferably from 5 to 25 wt%, of at least one flame retardant.

Preferably, the composition comprises, with respect to the total weight of the composition, from 0 to 5 wt.%, preferably 0,1 to 3 wt%, preferably 0,5 to 2 wt% with respect to the total weight of the composition, of at least one further additive.

The present invention also relates to a compound of formula (I): 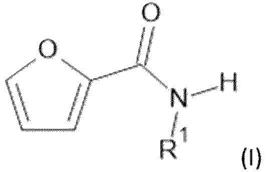 wherein R¹ is chosen among:
- a linear or branched alkyl group comprising from 3 to 18, preferably 3 to 11, carbon atoms and substituted by at least one, preferably one, hydroxyl (OH) group;
- a linear or branched alkyl group comprising from 3 to 18, preferably 3 to 11, carbon atoms and substituted by at least one, preferably one, NH(CO)CH₃ group; and
- a 2-methylene-furane group.

The present invention also relates to a method for the preparation of a compound of formula (I) such as defined above, comprising the reaction of methyl-2-furoate or ethyl-2-furoate with a compound of formula NH₂R¹, wherein R¹ is as defined above, optionally in a solvent, preferably an alcohol, for example ethanol.

The present invention finally also relates to a method for plasticizing a polyamide composition wherein at least one compound of formula (I): 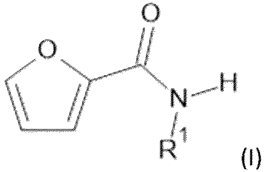 wherein R¹ is chosen among:
- a linear or branched alkyl group comprising from 3 to 18 carbon atoms;
- a linear or branched alkyl group comprising from 3 to 18 carbon atoms and substituted by at least one hydroxyl (OH) group;
- a linear or branched alkyl group comprising from 3 to 18 carbon atoms and substituted by at least one NH(CO)CH₃ group; and
- a 2-methylene-furane group.
is added to said polyamide composition, preferably in an amount, based on the total weight of the final polyamide composition, comprised between 2 to 34 wt %, preferably from 3 to 20 wt %, more preferably from 3 to 18 wt%.

### Detailed description

The present invention relates to a plasticizer for polyamide composition, said plasticizer comprising at least one compound of formula (I): 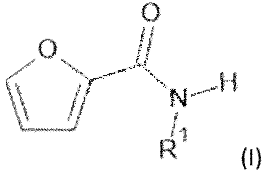 wherein R¹ is chosen among:
- a linear or branched alkyl group comprising from 3 to 18, preferably 3 to 11, carbon atoms;
- a linear or branched alkyl group comprising from 3 to 18, preferably 3 to 11, carbon atoms and substituted by at least one, preferably one, hydroxyl (OH) group;
- a linear or branched alkyl group comprising from 3 to 18, preferably 3 to 11, carbon atoms and substituted by at least one, preferably one, NH(CO)CH₃ group; and
- a 2-methylene-furane group.

The plasticizer of the present invention can also comprise an antioxidant, preferably less than 2 wt% of antioxidant. The antioxidant can notably be a sterically hindered phenol phenyl compound or a phosphite ester derived from sterically hindered phenol.

Preferably, in the compounds of formula (I), R¹ represents:
- a linear or branched alkyl group comprising from 3 to 18, preferably 3 to 11, carbon atoms; and
- a linear or branched alkyl group comprising from 3 to 18, preferably 3 to 11, carbon atoms and substituted by at least one, preferably one, hydroxyl (OH) group.

Preferably, the compound of formula (I) is chosen among the following compounds:

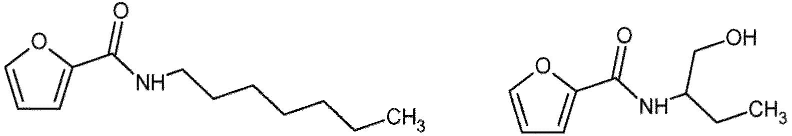

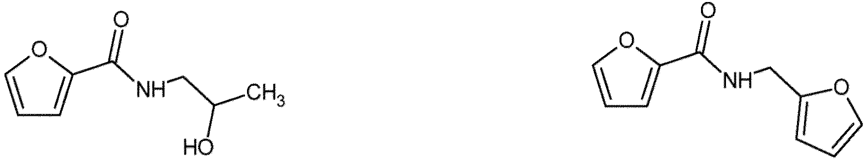

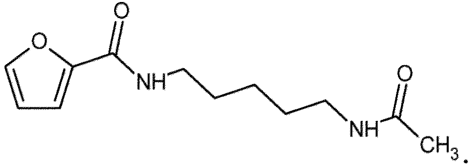

More preferably, the compound of formula (I) is chosen among the following compounds:

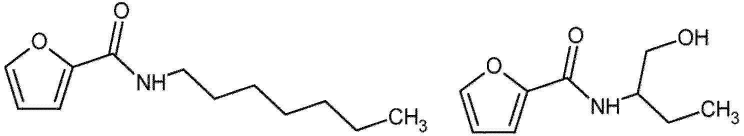

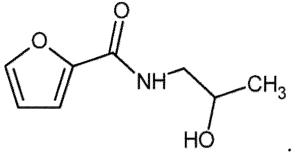

Compounds of formula (I) carry all an amide functionality. Amides can be readily synthesized by the well-known Schotten-Baumann reaction or its Einhorn variant starting from furan-2-carbonyl chloride or 2-furoyl-chloride and the corresponding amine (see i.a. Organikum, 16th edition, editor VEB Berlin 1986, page 412).

Preferably, the compounds of formula (I) can be obtained by reacting the ethyl or methyl 2-furane carboxylate with the corresponding amine (see Organikum, 16th edition, editor VEB Berlin 1986, page 409). This reaction avoids corrosive chloride functionalities, can be conducted without solvent or in the presence of alcohol (for example ethanol) as a solvent and generally proceeds at low temperature, for instance by evaporating the condensed alcohol. The amide obtained already has a high degree of purity.

The present invention also relates to a composition comprising:
- at least one polyamide; and
- at least one compound of formula (I) such as defined above.

The polyamide can in principle be chosen among any polyamide, amorphous or semi-crystalline polyamide, or a mixture thereof. The polyamide can be an aliphatic polyamide, a cycloaliphatic polyamide or a semi-aromatic polyamide, or a mixture thereof. The polyamide can be a homo-polyamide or a co-polyamide, or a mixture thereof.

The nomenclature used to define the polyamides is described in NF EN ISO 1874-1:2011 « Plastics - Polyamide (PA) moulding and extrusion materials - Part 1 : designation system and basis for specification», especially in page 3 (tables 1 and 2) and is well known by the skilled person.

Preferably, the aliphatic polyamide is obtained by the polycondensation of:
- at least one amino-acid having from 6 to 18 carbon atoms, preferably from 9 to 18 carbon atoms, more preferably from 10 to 18 carbon atoms, even more preferably from 10 to 12 carbon atoms, especially 11 carbon atoms, or
- at least one lactam compound having from 6 to 18 carbon atoms, preferably from 9 to 18 carbon atoms, more preferably from 10 to 18 carbon atoms, even more preferably from 10 to 12 carbon atoms, especially 11 carbon atoms; or
- at least one aliphatic diamine Ca comprising from 4 to 36 carbon atoms, preferably from 6 to 36 carbon atoms, more preferably from 6 to 12 carbon atoms, even more preferably from 10 to 12 carbon atoms, with an aliphatic diacid Cb having from 4 to 36 carbon atoms, preferably from 6 to 36 carbon atoms, more preferably from 6 to 12 carbon atoms, even more preferably from 10 to 12 carbon atoms.

The amino-acid having from 6 to 12 carbon atoms is preferably 6-aminohexanoic acid, 6-aminohexanoic acid, 9-aminononanoic acid, 10-aminodecanoic acid, 10-aminoundecanoic acid, 12-aminododecanoic acid and 11-aminoundecanoic acid and its derivatives, in particular N-heptyl-11-aminoundecanoic acid.

The lactam having from 6 to 12 carbon atoms is preferably caprolactam, decanolactam, undecanolactam or lauryllactam.

The diamine Ca having from 4 to 36 carbon atoms can be chosen among butanemethylenediamine, 1,5-pentamethylenediamine, 1,6-hexamethylenediamine, 1,7-heptamethylenediamine, 1,8-octamethylenediamine, 1,9-nonamethylenediamine, 1,10-decamethylenediamine, 1,11-undecamethylenediamine, 1,12-dodecamethylenediamine, 1,13-tridecamethylenediamine, 1,14-tetradecamethylenediamine, 1,16-hexadecamethylenediamine, 1,18-octadecamethylenediamine, octadecenediamine, eicosanediamine, docosanediamine, 2,2,4-trimethylhexanediamine (TMD), and diamines obtained from fatty acid.

The dicarboxylic acid Cb having from 4 to 36 carbon atoms can be chosen among butanedioic acid, pentanedioic acid, adipic acid, suberic acid, azelaic acid, sebacic acid, undecanedioic acid, dodecanedioic acid, brassylic acid, tetradecanedioic acid, pentadecanedioic acid, hexadecanedioic acid, octadecanedioic acid, and diacids obtained from fatty acids.

Advantageously, the aliphatic polyamide is chosen among PA6, PA66, PA11, PA12, PA6/66, PA610, PA612, PA1010, PA1012 and PA1212, preferably PA11, PA12, PA610, PA612, PA6/66, PA1010, PA1012 and PA1212, more preferably PA11, PA610, PA6/66, PA1010, PA1012 and PA1212, more preferably PA11 and PA12, in particular le PA11.

The semi-aromatic polyamide can be especially a polyamide of formula X/Yar such as disclosed in EP1505099, and in particular a semi-aromatic polyamide of formula A/XT wherein:
- A is chosen among a unit derived from an amino-acid such as described above, a unit derived from a lactam such as defined above or a unit derived from a formula (diamine Cc).(diacide Cd) wherein c represents the carbon atom number of the diamine and d represents the carbon atom number of the diacid, c and d, identical or different being chosen between 4 and 36, preferably between 9 and 18, the unit (diamine Cc) is preferably chosen among aliphatic diamine, linear or branched, such as defined above (Ca) cycloaliphatic diamines and alkylaromatic diamines and the unit (diacid Cd) is preferably chosen among aliphatic diacids, linear or branches such as defined above (Cb), cycloaliphatic diacids and aromatic diacids;
- XT represents a unit derived from the polycondensation of a diamine Cx and terephthalic acid wherein x is the carbon atom numbers of the diamine Cx and x is preferably comprised between 5 and 36, preferably between 9 and 18.

Preferably, the semi-aromatic polyamide is of formula A/5T, A/6T, A/9T, A/10T, or A/11T wherein A is such as defined above. Preferably it is chosen among PA MPMDT/6T, PA11/6T, PA11/5T, PA11/10T, PA 5T/10T, PA 11/BACT, PA 11/6T/10T, PA MXDT/10T, PA MPMDT/10T, PA BACT/10T, PA BACT/6T, PA BACT/10T/6T, PA 11/BACT/6T, PA 11/MPMDT/6T, PA 11/MPMDT/10T, PA 11/BACT/10T, PA 11/MXDT/10T, 11/5T/10T, wherein T corresponds to terephthalic acid, MXD corresponds to m-xylylene diamine, MPMD corresponds to methylpentamethylene diamine and BAC corresponds to bis(aminomethyl)cyclohexane.

The semi-aromatic polyamide can also be a polyamide of formula ZAr wherein Z in a unit from the polycondensation of at least one aliphatic diamine CA such as defined above and Ar is an aromatic dicarboxylic acid, for example terephthalic acid, isophthalic acid or 2,6-naphthalenedicarboxylic acid.

Preferably the polyamide is an aliphatic polyamide and is chosen among PA6, PA66, PA6/66, PA11, PA12, PA610, PA612, PA1010, PA1012 and PA1212.

Preferably, the composition comprises, based on the total weight of the composition, from 2 to 34 wt %, preferably from 3 to 20 wt%, preferably from 3 to 18 wt %, of the compound of formula (I).

Preferably, the composition comprises, based on the total weight of the composition, from 50 to 98 wt %, preferably from 70 to 97 wt %, more preferably from 75 to 97 wt %, of the at least one polyamide.

Preferably, the composition comprises, based on the total weight of the composition:
- from 50 to 98 wt %, preferably from 70 to 97 wt %, more preferably from 75 to 97 wt %, of polyamide; and
- from 2 to 34 wt %, preferably from 3 to 20 wt %, more preferably from 3 to 18 wt %, of at least one compound of formula (I).

The composition can also further comprise at least one impact modifier. Preferably, the composition comprises, based on the total weight of the composition, from 0 to 45 wt%, preferably from 3 to 45 wt%, preferably from 5 to 35 wt%, more preferably from 7 to 30 wt%, of at least one impact modifier.

The impact modifier can be an olefinic elastomer or an acrylic copolymer, such as EPRgMA (ethylene propylene rubber grafted with maleic anhydride), EPDMgMA (ethylene propylene diene monomer rubber grafted with maleic anhydride) or SEBSgMA (styrene ethylene butylene styrene rubber grafted maleic anhydride) or even an acrylic core-shell impact modifiers.

The composition can also further comprise from 0 to 5 wt%, preferably 0,1 to 3 wt%, preferably 0,5 to 2 wt% with respect to the total final weight of the composition, of at least one further additive.

The additive may be selected from UV protectants, UV stabilizers, optical brighteners, thermal stabilizers, pigments, lubricants, antioxidants, film-forming agents, filming aids, preservatives, anti-bacterial agents and mixtures thereof.

Preferably, the composition comprises, based on the total final weight of the composition, from 0 to 35 wt%, preferably from 5 to 30 wt%, more preferably from 5 to 25 wt%, of at least one flame retardant.

Preferably, the flame retardant is a halogen-free flame retardant. The halogen-free flame retardant is preferably selected from the group consisting of melamine cyanurate, melamine phosphate, melamine pyrophosphate, melamine polyphosphate, melamine phosphate, melamine pyrophosphate, dimelamine pyrophosphate, dimelamine phosphate, melon polyphosphate, phosphaphenanthrenes, metal hydroxides, phosphinic acid salts, diphosphinic acid salts and combinations hereof.

Furthermore, it is preferred that the flame retardant comprises in addition at least one synergist, the at least one synergist being preferably selected from the group consisting of nitrogen-containing compounds, nitrogen- and phosphorus-containing compounds, metal borates, metal carbonates, metal hydroxides, metal hydroxyoxides, metal nitrides, metal oxide , metal phosphates, metal sulfides, metal stannates, metal hydroxystannates, silicates, zeolites, basic zinc silicates, silicic acids and combinations hereof, in particular triazine derivatives, melamine, guanidine, guanidine derivatives, biuret, triuret, tartrazine, glycoluril, acetoguanamine, butyroguanamine, caprinoguanamine, benzoguanamine, melamine derivatives of cyanuric acid, melamine derivates of isocyanuric acid, melamine cyanurate, condensation products of melamine, melamine pyrophosphate, pyrophospates of the condensation products of melamine, dimelamine phosphate, dimelamine pyrophosphate, melamine polyphosphate, dicyandiamide, ammonium polyphosphate, ammonium hydrogen phosphate, ammonium dihydrogen phosphate, polyphosphates of the condensation products of melamine, melamine sulphate, allantoin, aluminium hydroxide, synthetic aluminium metahydroxide (synthetic aluminium hydroxyoxide), natural aluminium metahydroxide (natural aluminium hydroxyoxide), aluminium oxide, calcium borate, calcium carbonate, calcium magnesium carbonate, calcium oxide, calcium sulfide, iron oxide, magnesium borate, magnesium carbonate, magnesium hydroxide, magnesium nitride, magnesium oxide, magnesium sulfide, manganese hydroxide, manganese oxide, titanium nitride, titanium dioxide, zinc borate, zinc metaborate, zinc carbonate, zinc hydroxide, zinc nitride, zinc oxide, zinc phosphate, zinc sulfide, zinc stannate, zinc hydroxystannate, basic zinc silicate, tin oxide hydrate and combinations hereof. It is however likewise possible that the flame retardant is free of synergists.

Preferably, the present invention relates to a composition comprising, with respect to the total weight of the composition:
- from 50 to 98 wt %, preferably from 70 to 97 wt %, more preferably from 75 to 97 wt %, of polyamide; and
- from 2 to 34 wt %, preferably from 3 to 20 wt %, more preferably from 3 to 18 wt %, of at least one compound of formula (I);
- from 0 to 45wt%, preferably from 3 to 45 wt%, preferably from 5 to 35 wt%, more preferably from 7 to 30 wt%, of at least one impact modifier;
- from 0 to 35 wt%, preferably from 5 to 30 wt%, more preferably from 5 to 25 wt%, of at least one flame retardant; and
- from 0 to 5 wt.%, preferably 0,1 to 3 wt%, preferably 0,5 to 2 wt% with respect to the total weight of the composition, of at least one further additive.

The present invention also relates to the use of a compound of formula (I) as a plasticizer for polyamides. Preferably the polyamide is as described above.

The present invention also relates to a method for plasticizing a polyamide composition wherein at least one compound of formula (I): 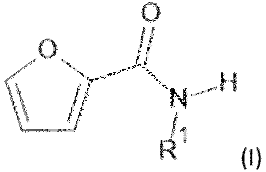 wherein R¹ is chosen among:
- a linear or branched alkyl group comprising from 3 to 18 carbon atoms;
- a linear or branched alkyl group comprising from 3 to 18 carbon atoms and substituted by at least one hydroxyl (OH) group;
- a linear or branched alkyl group comprising from 3 to 18 carbon atoms and substituted by at least one NH(CO)CH₃ group; and
- a 2-methylene-furane group.
is added to said polyamide composition, preferably in an amount, based on the total weight of the final polyamide composition, comprised between 2 to 34 wt %, preferably from 3 to 20 wt %, more preferably from 3 to 18 wt%.

The present invention relates to compound of formula (I): 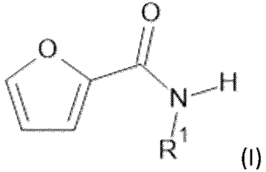 wherein R¹ is chosen among:
- a linear or branched alkyl group comprising from 3 to 18, preferably 3 to 11, carbon atoms and substituted by at least one, preferably one, hydroxyl (OH) group;
- a linear or branched alkyl group comprising from 3 to 18, preferably 3 15 to 11, carbon atoms and substituted by at least one, preferably one, NH(CO)CH₃ group; and
- a 2-methylene-furane group. 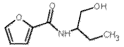 Preferably, the compound of formula (I) is chosen among the following compounds:

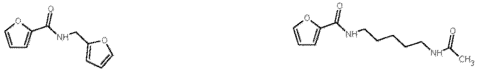

The present invention will now be described based on the following non limiting examples.

### Examples

### Compounds of formula (I)

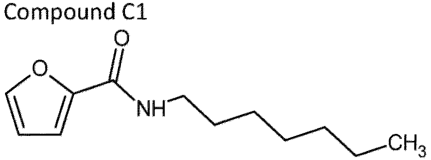

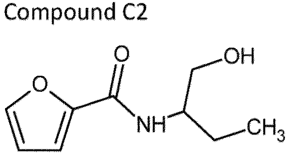

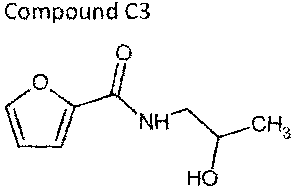

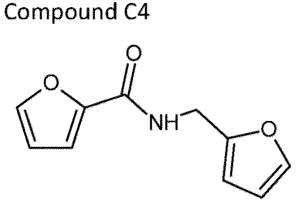

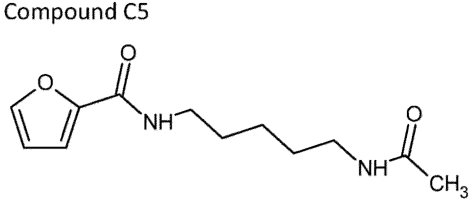

### Synthesis of compound C1

Ethyl-2-furoate (CAS 614-99-3) 25,726 g and heptylamine (CAS 111-68-2) 34,374 g in 50 ml of methanol were loaded into a three-neck flask equipped with a mechanical agitator. Under agitation, the solution was heated to 50°C in reflux mode for 2 hrs, then to 70 °C for 2 hrs followed by a heating to 80°C for 4 hrs. The reactor was then switched to distillation mode, and heated to 100°C for removal of the methanol, and then cooled down. 100 ml of chloroform was added to dissolve the product and the excess amine was extracted using an aqueous solution of HCl at 1% by weight. The solution was then washed with water until reaching pH 7. Finally, the chloroform was removed by distillation. The obtained product is purified by vacuum distillation at 160°C and a vacuum of 2 mbar. The product was obtained with a yield of 98 % and a purity of 99,3 % as a slightly yellowish liquid.
RMN¹H : NH : 8.35 ppm, CH (furan) : 7.79 ppm, 7.08 ppm, 6.59 ppm, CH2 : 3.22 ppm, 1.47 ppm, 1.25 ppm, CH3 : 0.83 ppm

### Synthesis of compound C2

Ethyl-2-furoate (CAS 614-99-3) 50,205 g and 2-amino-1-butanol (CAS 96-20-8) 50,001 g in 100 ml of methanol were loaded into a three-neck flask equipped with mechanical agitator. Under agitation, the solution was heated to 50°C in reflux mode for 2 hrs, then to 70 °C for 2 hrs hour followed by heating to 80°C for 4 hrs. The reactor was then switched to distillation mode, and heated to 100°C for removal of the methanol, then cooled down. 100 ml of chloroform was added to dissolve the product and the excess amine was extracted using an aqueous solution of HCl at 1% by weight. The solution was washed with water until reaching pH 7. Finally, the chloroform was removed by distillation.

The product was obtained with a yield of 98 % and a purity of 97,3 % as a white solid. It was used without further purification.

RMN¹H : NH : 7.85 ppm, CH (furan) : 7.82 ppm, 7.10 ppm, 6.62 ppm, CH : 3.79 ppm, CH2 : 4.70 ppm, 1.60 ppm, CH3 : 0.83 ppm.

### Synthesis of compound C3

Ethyl-2-furoate (CAS 614-99-3) 56,376 g and 1-amino-2-propanol (CAS 78-96-6) 43,651 g in 100 ml of methanol were loaded into a three-neck flask equipped with mechanical agitator. Under agitation, the solution was heated to 50°C in reflux mode for 2 hrs, then to 70 °C for 2 hrs hour followed by heating to 80°C for 4 hrs. The reactor was then switched to distillation mode, heated to 100°C for removal of the methanol, then cooled down. 100 ml of chloroform was added to dissolve the product and the excess amine was extracted using 1% of HCl solution. The solution was washed with water until reaching pH 7. Finally, the chloroform was removed by distillation. The obtained product is purified by vacuum distillation at 120°C and a vacuum of 3 mbar. The obtained product with a purity of 98,3 % was a yellowish viscous liquid. It was used without further purification.
RMN¹H : NH : 8.23 ppm, OH : 4,82 ppm, CH (furan) : 7.83 ppm, 7.13 ppm, 6.62 ppm, CH : 3.78 ppm, CH2 : 3.17 ppm, CH3 : 1.06 ppm

### Synthesis of compound C4

Ethyl-2-furoate (CAS 614-99-3) 50,205 g, 2-aminomethyl-furane (CAS 617-89-0) 50,001 g and 100 ml methanol were loaded into a three-neck flask equipped with mechanical agitator. Under agitation, the solution was heated to 50°C in reflux mode for 2 hrs, then to 70 °C for 2 hrs hour followed by heating to 80°C for 4 hrs. The reactor was then switched to distillation mode, and heated to 100°C for removal of the methanol, then cooled down. 100 ml of chloroform was added to dissolve the product and the excess amine was extracted using an aqueous solution of HCl at 1% by weight. The solution was washed with water until reaching pH 7. Finally, the chloroform was removed by distillation.

The product crystallized with a purity of 97,9 % as a brownish solid with a melting point of 82°C. It was used without further purification.

RMN¹H : NH : 8.85 ppm, CH (furan) : 7.84 ppm, 7.56 ppm, 7.14 ppm, 6.62 ppm, 6.39 ppm, 6.24 ppm, CH2 : 4.39 ppm.

### Synthesis of compound C5

67.834 g of methyl-2-furoate, 82.645 g of 1,5-pentamethylene diamine and 45 g of methanol into was loaded into a three-neck flask equipped with a mechanical agitator. The mixture was heated in reflux mode to 50°C and stirred for 2 hrs, then 70°C for 2 hrs hour followed by heating to 80°C for 4 hrs. The reactor was changed into distillation mode, heated to 200°C for removal of the methanol and unreacted reagents under 100 ml/min of N2 sweeping. In distillation mode, 40.12 g of acetic acid, 15 g of boric acid and 150 ml of toluene were added and heated to 120°C for 8 hrs. Then, the reactor was heated to 200°C to remove the toluene. 150 ml of chloroform was added to dissolve the product, washed with an aqueous solution of 1% by weight NaOH to wash excess acids and then washed with water until reaching pH 7. Finally, the chloroform was distilled to obtain the final product.

The product with a purity of 98,1 % was obtained as a brownish very viscous liquid. It was used without further purification.
RMN¹H : NH : 8.34 ppm, CH (furan) : 7.81 ppm, 7.06 ppm, 6.61 ppm, CH2 : 1.2-1.69 ppm, CH2 : 3.37 ppm, CH2 : 3.20 ppm, CH3 : 1.76 ppm

All purities are obtained by liquid chromatography.

### Preparation of plasticized polymer samples

On a Haake rheometer equipment, 45 g of unmodified PA11 resin was mixed with the appropriate amount of plasticizer, 4, 8 and 12 wt % at 220°C at 20 rpm for 1 minute to obtain complete melting followed by 3 minutes at 60 rpm mixing speed for complete blending.

### Results

Table 1 below summarizes the glass transition temperatures (Tg) of PA11 compositions comprising 0, 4, 8 or 12 wt% of compounds C1 to C5 as plasticizers, respectively and BBSA as a comparative example.

The Tg is measured according to ISO 11357 with a heating ramp of 20°C/min. Typically, the 2^{nd} heating curve is used to determine the Tg.

Conditions for measuring Tg:
- Apparatus : DSC TA Q2000 with intracooler
- Standard : ISO 11357
- Programmation
- Equilibrium at -60°C
- Isothermal 5min
- 20°C/min at 240°C
- 20°C/min at -60°C
- Isothermal 5min
- 20°C/min at 240°C

**[Table 1] Glass transition temperature of plasticized polyamide compositions**

| Amount | Tg [°C] | | | | | |
|---|---|---|---|---|---|---|
| | BBSA | C1 | C2 | C3 | C4 | C5 |
| 0 wt % | 52,4 | 52,4 | 52,4 | 52,4 | 52,4 | 52,4 |
| 4 wt % | 38,9 | 34,0 | 33,6 | 36,0 | 34,6 | 35,4 |
| 8 wt % | 26,2 | N.D. | 25,8 | 27,6 | 27,6 | 22,1 |
| 12 wt% | 21,6 | 16,5 | 17,8 | 24,8 | 28,5 | N.D. |

The results show that the compounds C1-C5 efficiently lower the glass transition temperature of the polyamide. Moreover, the Tg obtained by using the compounds C1-C5 is lower than the Tg obtained by using BBSA.

The compounds of formula (I) thus appear to be very interesting compounds for use as plasticizers in polyamide compositions.

## Claims

1. Plasticizer for polyamide composition, said plasticizer comprising at least one compound of formula (I): 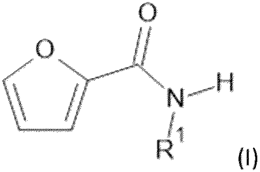 wherein R¹ is chosen among:
- a linear or branched alkyl group comprising from 3 to 18 carbon atoms;
- a linear or branched alkyl group comprising from 3 to 18 carbon atoms and substituted by at least one hydroxyl (OH) group;
- a linear or branched alkyl group comprising from 3 to 18 carbon atoms and substituted by at least one NH(CO)CH₃ group; and
- a 2-methylene-furane group.

2. Plasticizer according to claim 1 wherein R¹ is chosen among:
- a linear or branched alkyl group comprising from 3 to 18, preferably 3 to 11, carbon atoms; and
- a linear or branched alkyl group comprising from 3 to 18, preferably 3 to 11, carbon atoms and substituted by at least one, preferably one, hydroxyl (OH) group.

3. Plasticizer according to claim 1 or 2 wherein the compound of formula (I) is chosen among the following compounds:

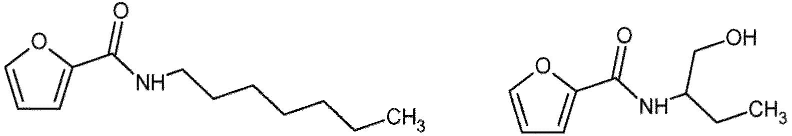

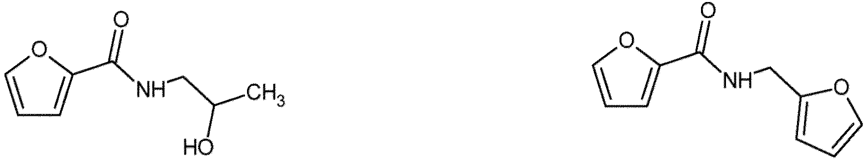

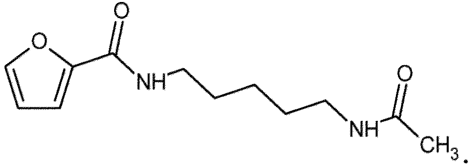

4. Plasticizer according to claim 1 or 2 wherein the compound of formula (I) is chosen among the following compounds:

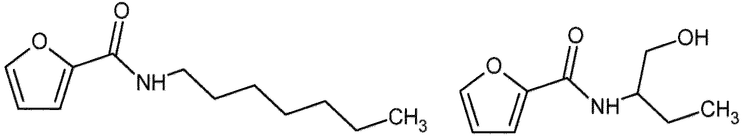

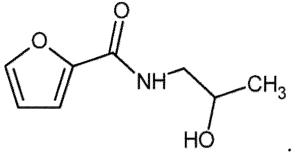

5. Composition comprising:
- at least one polyamide; and
- at least one compound of formula (I) such as defined in any one of claims 1 to 4.

6. Composition according to claim 5, wherein the at least one polyamide is an aliphatic polyamide and is chosen among PA6, PA66, PA6/66, PA11, PA12, PA610, PA612, PA1010, PA1012 and PA1212, preferably PA11, PA12, PA610, PA6/66, PA612, PA1010, PA1012 and PA1212, more preferably PA11, PA610, PA6/66 PA1010, PA1012 and PA1212, more preferably PA11 and PA12, and in particular PA11.

7. Composition according to claim 5 or 6, comprising, with respect to the total weight of the composition, from 50 to 98 wt%, preferably from 70 to 97 wt%, more preferably from 75 to 97 wt%, of the at least one polyamide.

8. Composition according to any one of claims 5 to 7, comprising, with respect to the total weight of the composition, from 2 to 34 wt%, preferably from 3 to 20 wt%, preferably from 3 to 18 wt%, of the at least one compound of formula (I).

9. Composition according to any one of claims 5 to 7, comprising, with respect to the total weight of the composition:
- from 50 to 98 wt%, preferably from 70 to 97 wt%, more preferably from 75 to 97 wt%, of polyamide; and
- from 2 to 34 wt%, preferably from 3 to 20 wt %, more preferably from 3 to 18 wt%, of at least one compound of formula (I);
- from 0 to 45wt%, preferably from 3 to 45 wt%, preferably from 5 to 35 wt%, more preferably from 7 to 30 wt%, of at least one impact modifier;
- from 0 to 35 wt%, preferably from 5 to 30 wt%, more preferably from 5 to 25 wt%, of at least one flame retardant; and
- from 0 to 5 wt%, preferably 0.1 to 3 wt%, preferably 0,5 to 2 wt% with respect to the total weight of the composition, of at least one further additive.

10. Composition according to any one of claims 5 to 8, comprising, with respect to the total weight of the composition, from 3 to 45 wt%, preferably from 5 to 35 wt%, more preferably from 7 to 30 wt%, of at least one impact modifier.

11. Composition according to any one of claims 5 to 8 and 10, comprising, with respect to the total weight of the composition, from 5 to 30 wt%, more preferably from 5 to 25 wt%, of at least one flame retardant.

12. Composition according to any one of claims 5 to 8, 10 and 11, comprising, with respect to the total weight of the composition, from 0 to 5 wt.%, preferably 0.1 to 3 wt%, preferably 0,5 to 2 wt% with respect to the total weight of the composition, of at least one further additive.

13. Compound of formula (I): 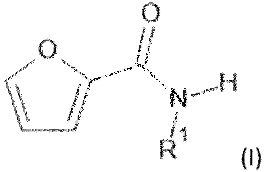 wherein R¹ is chosen among:
- a linear or branched alkyl group comprising from 3 to 18, preferably 3 to 11, carbon atoms and substituted by at least one, preferably one, hydroxyl (OH) group;
- a linear or branched alkyl group comprising from 3 to 18, preferably 3 to 11, carbon atoms and substituted by at least one, preferably one, NH(CO)CH₃ group; and
- a 2-methylene-furane group.

14. Method for the preparation of a compound of formula (I) as defined in claim 13, comprising the reaction of methyl-2-furoate or ethyl-2-furoate with a compound of formula NH2R1 wherein R¹ is as defined in claim 13, optionally in a solvent, preferably an alcohol, for example ethanol.

15. Method for plasticizing a polyamide composition wherein at least one compound of formula (I): 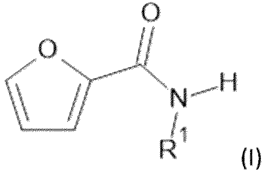 wherein R¹ is chosen among:
- a linear or branched alkyl group comprising from 3 to 18 carbon atoms;
- a linear or branched alkyl group comprising from 3 to 18 carbon atoms and substituted by at least one hydroxyl (OH) group;
- a linear or branched alkyl group comprising from 3 to 18 carbon atoms and substituted by at least one NH(CO)CH₃ group; and
- a 2-methylene-furane group.
is added to said polyamide composition, preferably in an amount, based on the total weight of the final polyamide composition, comprised between 2 to 34 wt %, preferably from 3 to 20 wt %, more preferably from 3 to 18 wt%.
